# EUROPÄISCHE PATENTSCHRIFT

(11) **EP 0 713 810 B1**
(45) Veröffentlichungstag und Bekanntmachung des Hinweises auf die Patenterteilung: **02.12.1998**
(21) Anmeldenummer: 95114626.5
(22) Anmeldetag: 18.09.1995
(51) Int. Cl.: B60S 1/38

(54) **Scheibenwischer mit austauschbarem Wischergummi**
Windscreen wiper with replaceable wiper blade rubber
Essuie-glace avec lame d'essuie-glace échangeable

(30) Priorität: 24.11.1994 DE 4441855
(43) Veröffentlichungstag der Anmeldung: 29.05.1996
(73) Patentinhaber: Bayerische Motoren Werke Aktiengesellschaft, 80788 München (DE)
(72) Erfinder: Gaisreiter, Johann, D-82444 Schlehdorf (DE)

(56) Entgegenhaltungen:
- EP-A- 0 390 709
- FR-A- 2 546 117

## Beschreibung

Die Erfindung betrifft einen Scheibenwischer mit austauschbarem Wischergummi oder dergleichen, mit den im Oberbegriff des Patentanspruches 1 angegebenen Merkmalen.

Ein derartiger Scheibenwischer ist durch die EP-A-0 390 709 bekannt, bei dem der Wischergummi bereichsweise in eine Führung in einem Aufnahmeteil eingesteckt ist. Zur Lagefixierung des Wischergummis in der Führung sind zwei Stifte mit einem Abstand voneinander in entsprechende Durchtrittsöffnungen im Aufnahmeteil einzustecken, die jeweils mit einem aus der Durchtrittsöffnung vorstehenden Bereich einen mit einem zugeordneten Stirnbereich des Wischergummis zusammenwirkenden Anschlag bilden. Zur Vermeidung größerer Verstellbewegungen des Wischergummis in der Führung ist die Länge des Wischergummis auf den Abstand zwischen den beiden Stiften anzupassen.

In dem Gebrauchsmuster DE-U-82 20 739.9 ist ein Scheibenwischer angegeben, der mit seinem Führungsbügelsystem ein Aufnahme- und Halteteil abstützt, an dem ein Wischergummi befestigt ist. Das Aufnahme- und Halteteil weist eine Führung auf, in die ein Umfangsabschnitt des Wischergummis einzuschieben ist. Zur axialen Fixierung des Wischergummis sind zwei Kappen vorgesehen, die stirnseitig mit dem Aufnahme- und Halteteil verbindbar sind. Jede Kappe kann lediglich eine Verlagerung des Wischergummis in eine Verstellrichtung verhindern. Die großvolumigen Kappen sind kostenaufwendig zu fertigen. Um eine Anpassung des Wischergummis an die zu reinigende Scheibe zu ermöglichen, ist das Aufnahme- und Halteteil entsprechen flexibel auszubilden, wodurch sich der Wischergummi Weniger fest an dem Aufnahme- und Halteteil abstützen kann.

Ein ähnlicher Scheibenwischer ist in der DE-A-16 55 347 beschrieben, der in einem am Führungsbügelsystem des Scheibenwischers abgestützten Halter eine stirnseitig geschlossene Führung aufweist, in die der Wischergummi über eine seitliche Zugangsöffnung einzuführen ist. Der Wischergummi ist dabei nahezu rechtwinklig abzuknicken, wodurch die Wischerlippe des Wischergummis beschädigt werden kann.

Der Erfindung liegt die Aufgabe zugrunde, einen Scheibenwischer mit austauschbarem Wischergummi oder dergleichen nach dem Oberbegriff des Patentanspruches 1 und nach der Art der EP-A-0 390 709 anzugeben, der mit einfacheren Mitteln an dem Aufnahmeteil zu befestigen ist.

Diese Aufgabe ist durch die im Patentanspruch 1 angegebenen Merkmale gelöst. Um den Wischergummi in seiner Führung im Aufnahmeteil zu fixieren, ist lediglich ein einziger Stift oder Bolzen erforderlich, der in eine im Aufnahmeteil ausgebildete Durchtrittsöffnung lösbar einzustecken ist und mit einem aus der Durchtrittsöffnung vorstehenden Bereich in eine Öffnung im Wischergummi eingreift. Der Stift oder Bolzen kann beispielsweise durch Reib- oder Klemmwirkung in der Durchtrittsöffnung im Aufnahmeteil und/oder in der Öffnung im Wischergummi festgehalten sein. Ist in dem Wischergummi beispielsweise ein Federstab eingebettet und weist dieser eine mit der Durchtrittsöffnung und der Öffnung fluchtende Ausnehmung auf, so kann der Stift oder Bolzen beispielsweise durch Klemm- und/oder Reibwirkung in der Ausnehmung festgehalten sein. Der Stift oder Bolzen kann auch mit einem Gewinde versehen und in ein Gegengewinde in der Durchtrittsöffnung, der Öffnung oder Ausnehmung eingeschraubt sein, wobei eventuell eine Verdrehsicherung verwendet ist. An dem Stift oder Bolzen können Kraftangriffsflächen vorgesehen sein, an denen eine den Stift oder Bolzen von dem Wischergummi lösende Kraft bzw. ein lösendes Moment zu bewirken ist. Vorzugsweise wird der Stift oder Bolzen beim Entfernen von dem Aufnahmeteil nicht beschädigt und kann auch nach einem beispielsweise mehrmaligen Wechsel des Wischergummis zur Fixierung eines jeweils neuen Wischergummis verwendet werden. In den Wischergummi kann ein Federstab eingebettet sein, der beispielsweise lose in eine zur Führung etwa parallele Aufnahmeöffnung im Wischergummi axial einzustecken und durch einen formschlüssigen Eingriff des Stiftes oder Bolzens in eine Ausnehmung in dem Federstab axial fixiert ist. Durch einfaches Entfernen des Stiftes oder Bolzens kann der Wischergummi der Führung entnommen und gegebenenfalls der Federstab von der Aufnahmeöffnung des Wischergummis entfernt werden. Der Scheibenwischer ist dadurch in materialreine Teile zerlegt, die sortenrein zu sammeln und für andere oder gleichartige Verwendungszwecke wiederverwendbar oder aufzubereiten sind.

Vorteilhafte Ausgestaltungen der Erfindung sind Gegenstand von Unteransprüchen.

Ein Ausführungsbeispiel der Erfindung wird anhand einer Zeichnung näher erläutert. Es zeigen
- Figur 1: einen Querschnitt durch den Wischergummi,
- Figur 2: eine Seitenansicht eines Bereiches des Scheibenwischers und
- Figur 3: eine Draufsicht des in Figur 2 sichtbaren Scheibenwischerbereiches.

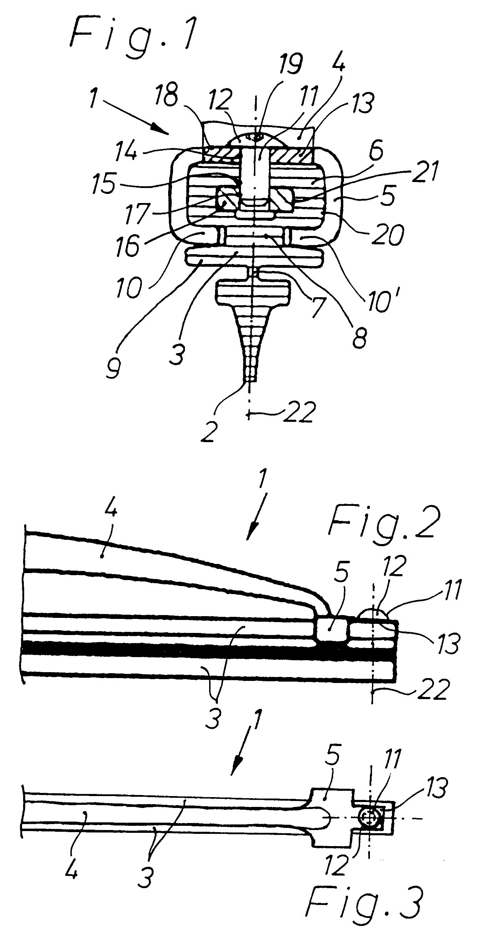

In Figur 1 ist ein Querschnitt eines Scheibenwischers dargestellt, der zur Wasserbeseitigung an der Windschutzscheibe eines Kraftfahrzeugs vorgesehen ist. Der Scheibenwischer 1 weist einen in üblicher Weise mit einer Wischerlippe 2 versehenen Wischergummi 3 auf, der über ein Führungsbügelsystem abgestützt ist, das eine Anpassung an die Krümmung der Windschutzscheibe ermöglicht. Die Abstützung des Wischergummis 3 an den Führungsbügeln 4 des Führungsbügelsystems erfolgt über Krallenelemente 5 an den Enden der Führungsbügel 4, die einen Umfangsabschnitt 6 des Wischergummis 3 etwa C-förmig umgreifen. Die Wischerlippe 2 ist über Stege 7, 8 und eine dazwischen angeordnete Stützschulter 9 mit dem Umfangsabschnitt 6 verbunden. Im Wischerbetrieb stützt sich die Stützschulter 9 an den Armenden 10, 10' des Krallenelements 5 von außen ab. Die Krallenelemente 5 bilden jeweils mit ihrem Innenumfang eine Führung 20 für einen Umfangsabschnitt 6, der axial in die Führung 20 einschiebbar ist. Die Krallenelemente 5 stellen jeweils ein Aufnahmeteil zur Abstützung eines zugeordneten Umfangsabschnittes 6 des Wischergummis 3 dar. Zur axialen Fixierung des Wischergummis 3 ist ein einziger Stift 11 vorgesehen, der mit einem Kopfteil 12 versehen ist. Die Stegwand 13 des Krallenelements 5 ist hierzu axial nach außen verlängert und weist eine zur Führung 20 etwa senkrechte Durchtrittsöffnung 14 auf. In dem Wischergummi 3 ist eine zur Durchtrittsöffnung 14 koaxiale Öffnung 15 vorgesehen. Im Bereich des Umfangsabschnittes 6 ist in den Wischergummi 3 ein Federstab 16 eingebettet, der eine mit der Öffnung 15 fluchtende Ausnehmung 17 aufweist. Die Durchtrittsöffnung 14, die Öffnung 15 und die Ausnehmung 17 sind im Durchmesser an die Querschnittsform des Stiftes 11 angepaßt und halten den bis zum Anliegen des Kopfteiles 12 an einer Außenfläche 18 des Krallenelements 5 in die Durchtrittsöffnung 14, die Öffnung 15 und die Ausnehmung 17 eingesteckten Stift 11 durch Klemm- und/oder Reibwirkung fest. An dem Kopfteil 12 des Stiftes 11 sind beispielsweise durch einen Innensechskant 19 Kraftangriffsflächen gebildet, an denen ein Werkzeug eine axiale Kraft bewirken kann, die den Stift 11 aus der Durchtrittsöffnung 14, der Öffnung 15 und aus der Ausnehmung 17 herausverlagert. Anschließend kann der Wischergummi 3 mit seinem Umfangsabschnitt 6 aus der durch das Krallenelement 5 gebildeten Führung 20 axial herausverlagert werden. Der lediglich lose in eine Aufnahmeöffnung 21 im Umfangsabschnitt 6 eingelegte Federstab 16 läßt sich ebenfalls mühelos aus der Aufnahmeöffnung 21 herausverlagern, wodurch der Scheibenwischer 1 in sortenreine Materialien zerlegt ist. Diese können - soweit sie unversehrt sind - für gleiche oder andere Verwendungszwecke wieder-verwendet oder aufbereitet werden. Ist die Wischerlippe 2 beschädigt und deshalb der Wischergummi 3 auszuwechseln, so kann der unversehrte Federbügel in die Aufnahmeöffnung 21 eines neuen Wischergummis 3 eingeschoben und nach dem Einbringen des Wischergummis 3 in die von den Krallenelementen 5 gebildeten Führung 20 durch einfaches Einstecken des Stiftes 11 in die Durchtrittsöffnung 14, die Öffnung 15 und die Aufnahmeöffnung 21 von diesem Stift 11 fixiert werden. Die mit dem Stift 11 zusammenwirkenden Umfangsflächen der Durchtrittsöffnung 14, der Öffnung 15 und der Aufnahmeöffnung 21 bilden ausreichende Stützflächen, die eine axiale Verlagerung des Wischergummis 3 in der Führung 20 und des Federstabs 16 in der Aufnahmeöffnung 21 verhindern.

Der einer Seitenansicht eines Bereiches des Scheibenwischers 1 entsprechenden Figur 2 sind weitere Einzelheiten entnehmbar. Die Durchtrittsöffnung für den zur axialen Fixierung des Wischergummis 3 vorgesehenen Stift 11 ist an der nach außen verlängerten Stegwand 13 des äußersten, an einem Führungsbügel 4 befestigten Krallenelements 5 ausgebildet. In der Figur ist lediglich die Achse 22 der Durchtrittsöffnung bzw. des Stiftes 11 erkennbar, von dem in der Figur lediglich das Kopfteil 12 sichtbar ist.

Aus der Draufsicht gemäß Figur 3 auf den in Figur 2 angegebenen Bereich des Scheibenwischers 1 sind weitere Einzelheiten, beispielsweise die bei dem Ausführungsbeispiel gewählte kreisförmige Querschnittsform des Stiftes 11 und der Anlagefläche des Kopfteiles 12 erkennbar.

Die Erfindung ist auch in einer von dem Ausführungsbeispiel abweichenden Weise realisierbar. Der Stift kann beispielsweise anstelle eines Kopfteiles lediglich eine radiale Erweiterung aufweisen. Ebenso ist es möglich, daß der Stift keine radiale Erweiterung und kein Kopfteil aufweist. Eine axiale Anlagefläche, beispielsweise die Stirnfläche des Stiftes kann eine Anschlagfläche bilden, die zur Begrenzung des axialen Einsteckweges mit einer Gegenanschlagfläche an dem Wischergummi oder an einem damit verbundenen Teil, beispielsweise an dem Federelement zusammenwirkt. Es ist nicht erforderlich, daß an dem Stift separate Kraftangriffsflächen ausgebildet sind, über die der Stift manuell oder mit Hilfe eines Werkzeugs zu entfernen ist. Ebenso kann ein Umfangsbereich des Stiftes in Gebrauchslage des Scheibenwischers aus der Durchtrittsöffnung hervorstehen und eine mit den Kraftangriffsflächen vergleichbare, beispielsweise glatte Umfangsfläche bilden. Vorzugsweise ist lediglich ein einziger Stift zur axialen Fixierung des Wischergummis zu verwenden. Ebenso können auch zwei oder mehrere Stifte vorgesehen sein, die jeweils in einem vorgesehenen Bereich eines den Wischergummi aufnehmenden Aufnahmeteiles zumindest in eine Durchtrittsöffnung in dem Aufnahmeteil und in eine Öffnung in dem Wischergummi einsteckbar sind. Anstelle eines durch ein Krallenelement gebildeten Aufnahmeteiles kann auch ein separates Aufnahmeteil vorgesehen sein, das in einer Führung bereichsweise oder über die gesamte Länge des Wischergummis einen Umfangsabschnitt des Wischergummis aufnimmt und an Stützelementen eines Führungsbügels oder Führungsbügelsystems befestigt ist.

## Patentansprüche

1. Scheibenwischer mit austauschbarem Wischergummi (3) oder dergleichen, mit einem Aufnahmeteil (5), das an einem Führungsbügel (4) oder Führungsbügelsystem des Scheibenwischers (1) befestigt ist und eine Führung (20) aufweist, in die ein Umfangsabschnitt (6) des Wischergummis (3) einsteckbar ist, sowie mit einem Stift (11) oder Bolzen, der etwa senkrecht zur Längsrichtung der Führung (20) lösbar in eine Durchtrittsöffnung (14) im Aufnahmeteil (5) eingesteckt ist und einen aus der Durchtrittsöffnung (14) vorstehenden Bereich aufweist, der mit einer Stützfläche des Wischergummis (3) zusammenwirkend eine Verlagerung des Umfangsabschnittes (6) des Wischergummis (3) aus der Führung (20) verhindert, dadurch gekennzeichnet, daß der aus der Durchtrittsöffnung (14) vorstehende Bereich des Stiftes (11) bzw. Bolzens in eine die Stützfläche bildende Öffnung (15) im Wischergummi (3) eingesteckt ist.

2. Scheibenwischer nach Anspruch 1, dadurch gekennzeichnet, daß der Stift (11) oder Bolzen ein Kopfteil (12) oder eine radiale Erweiterung aufweist und bis zum Anliegen des Kopfteiles (12) oder der radialen Erweiterung an dem Aufnahmeteil (Krallenelement 5) oder an dem Führungsbügel in die Durchtrittsöffnung (14) und in die Öffnung (15) einzustecken ist.

3. Scheibenwischer nach Anspruch 1 oder 2, dadurch gekennzeichnet, daß in den Umfangsabschnitt (6) des Wischergummis (3) ein Federstab (16) eingebettet ist, in dem eine mit der Durchtrittsöffnung (14) und der Öffnung (15) fluchtende Ausnehmung (17) ausgebildet ist, in die nach der Montage des Wischergummis (3) der Stift (11) oder Bolzen teilweise eingreift.

4. Scheibenwischer nach einem der Ansprüche 1 bis 3, dadurch gekennzeichnet, daß das Aufnahmeteil ein mit einem Ende eines Führungsbügels (4) fest verbundenes Krallenelement (5) ist.

5. Scheibenwischer nach einem der Ansprüche 1 bis 4, dadurch gekennzeichnet, daß der Stift (11) oder Bolzen durch Klemm- und/oder Reibwirkung in der Durchtrittsöffnung (14), Öffnung 15 und/oder Ausnehmung (17) festgehalten ist.

6. Scheibenwischer nach Anspruch 4 oder 5, dadurch gekennzeichnet, daß die Durchtrittsöffnung (14) in einer axialen Verlängerung einer Wand (Stegwand 13) des Krallenelements (5) ausgebildet ist.

7. Scheibenwischer nach Anspruch 6, dadurch gekennzeichnet, daß die Wand die Stegwand (13) des Krallenelements (5) ist.

8. Scheibenwischer nach einem der Ansprüche 1 bis 7, dadurch gekennzeichnet, daß der Stift (11) oder Bolzen Kraftangriffsflächen (Innensechskant 19) aufweist, an denen manuell oder mittels einem Werkzeug eine axiale Kraft zu bewirken ist, die den Stift (11) oder Bolzen aus der Druchtrittsöffnung (14), Öffnung (15) und gegebenenfalls aus der Ausnehmung (17) entfernt.

## Claims

1. A windscreen wiper comprising an interchangeable wiper blade (3) or the like, a receiving part (5) secured to a guide fork (4) or guide-fork system on the windscreen wiper (1) and having a guide (20) into which a peripheral portion (6) of the wiper blade (3) is insertable, and a pin (11) or bolt which is inserted loosely, approximately at right angles to the longitudinal direction of the guide (20), into a passage opening (14) in the receiving part and has a region which projects from the passage opening (14) and co-operates with a supporting surface on the wiper blade (3) to prevent the peripheral portion (6) of the wiper blade (3) from being moved out of the guide (20), characterised in that the region of the pin (11) or bolt projecting from the passage opening (14) is inserted into an opening (15) constituting the supporting surface in the wiper blade (3).

2. A windscreen wiper according to claim 1, characterised in that the pin (11) or bolt has a head part (12) or a radial wide portion and can be inserted into the passage opening (14) and into the opening (15) until the bead part (12) or the radial wide portion abuts the receiving part (claw element 5) or against the guide fork.

3. A windscreen wiper according to claim 1 or claim 2, characterised in that a spring bar (16) is embedded in the peripheral portion (6) of the wiper blade (3) and is formed with a recess (17) in line with the passage opening (14) and the opening (15) and in which the pin (11) or bolt partly engages after the wiper blade (3) has been fitted,

4. A windscreen wiper according to any of claims 1 to 3, characterised in that the receiving part is a claw element (5) firmly connected to one end of the guide fork (4).

5. A windscreen wiper according to any of claims 1 to 4, characterised in that the pin (11) or bolt is firmly held by clamping and/or friction in the passage opening (14), the opening (15) and/or the recess (17).

6. A windscreen wiper according to claim 4 or claim 5, characterised in that the passage opening (14) is formed in an axial prolongation of a wall (web wall 13) of the claw element (5).

7. A windscreen wiper according to claim 6, characterised in that the wall is the web wall (13) of the claw element (5).

8. A windscreen wiper according to any of claims 1 to 7, characterised in that the pin (11) or bolt has force-application surfaces (inner hexagon 19) against which an axial force must be applied manually or by a tool in order to remove the pin (11) or bolt from the passage opening (14), the opening (15) or optionally from the recess (17).

## Revendications

1. Essuie-glace à lame échangeable en caoutchouc (3) ou analogue, dans lequel :
- une pièce de réception (5) est fixée à un étrier de guidage (4) ou à un système d'étriers guidant l'essuie-glace (1) et présente un guide (20) dans lequel peut être emmanchée une partie périphérique (6) de la lame de caoutchouc (3),
- une broche (11) ou une goupille peut être enfoncée à peu près perpendiculairement à la direction longitudinale du guide (20) de manière amovible, dans une ouverture de passage (14) prévue dans la pièce de réception (5) et présente une partie qui dépasse de l'ouverture de passage (14) et qui, en coopérant avec une portée d'appui située sur la lame de caoutchouc (3), empêche la partie périphérique (6) de cette lame de se dégager du guidage (20),
cet essuie-glace étant caractérisé en ce que
la partie de la broche (11) ou de la goupille qui dépasse de l'ouverture de passage (14) est emmanchée dans une ouverture (15), constituant portée d'appui, pratiquée dans la lame de caoutchouc (3).

2. Essuie-glace selon la revendication 1,
caractérisé en ce que
la broche (11) ou la goupille présente une tête (12) ou un élargissement radial, et doit être enfoncée dans l'ouverture de passage (14) et l'ouverture (15) jusqu'à ce que la tête (12) ou l'élargissement radial vienne s'appliquer sur la pièce de réception (élément à griffes 5) ou sur l'étrier de guidage.

3. Essuie-glace selon la revendication 1 ou 2,
caractérisé en ce que
dans la partie périphérique (6) de la lame de caoutchouc (3) est noyée une barre élastique (16) dans laquelle est pratiquée un évidement (17) aligné avec l'ouverture de passage (14) et l'ouverture (15), évidement dans lequel vient en prise une partie de la broche (11) ou de la goupille, après montage de la lame de caoutchouc (3).

4. Essuie-glace selon une des revendications 1 à 3,
caractérisé en ce que
la pièce de réception est un élément à griffes (5) solidaire d'une extrémité d'un étrier de guidage (4).

5. Essuie-glace selon une des revendications 1 à 4,
caractérisé en ce que
la broche (11) ou la goupille est maintenue fermement par serrage et/ou frottement dans l'ouverture de passage (14), l'ouverture (15) et l'évidement (17).

6. Essuie-glace selon la revendication 4 ou 5,
caractérisé en ce que
l'ouverture de passage (14) est percée dans un prolongement axial d'une paroi (paroi-barre 13) de l'élément à griffes (5).

7. Essuie-glace selon la revendication 6,
caractérisé en ce que
la paroi est la paroi-barre (13) de l'élément à griffes (5).

8. Essuie-glace selon une des revendications 1 à 7,
caractérisé en ce que
la broche (11) ou la goupille présente des portées de transmission de force (six-pans interne 19) sur lesquelles on peut exercer par la main ou par un outil une force qui a pour effet de retirer la broche (11) ou la goupille de l'ouverture de passage (14), de l'ouverture (15) et le cas échéant de l'évidement (17).
